# FASCICULE DE BREVET EUROPEEN

(11) **EP 0 466 554 B1**
(45) Date de publication et mention de la délivrance du brevet: **18.01.1995**
(21) Numéro de dépôt: 91401814.8
(22) Date de dépôt: 02.07.1991
(51) Int. Cl.: H04N 5/44

(54) **Procédé de traitement d'un signal vidéo**
Videosignalverarbeitungsverfahren
Method for processing a video signal

(30) Priorité: 13.07.1990 FR 9008951
(43) Date de publication de la demande: 15.01.1992
(73) Titulaire: LABORATOIRE EUROPEEN DE RECHERCHES ELECTRONIQUES AVANCEES, SOCIETE EN NOM COLLECTIF, 92400 Courbevoie (FR)
(72) Inventeur: Guillon, Jean-Claude, F-92045 Paris La Defense (FR); Perdrieau, Laurent, F-92045 Paris La Defense (FR)
(74) Mandataire: Ruellan-Lemonnier, Brigitte

(56) Documents cités:
- EP-A- 0 309 875
- EP-A- 0 343 539
- NTZ ARCHIV, vol. 10, no. 9, septembre 1988, pages 259-265, Berlin, DE; R.LÜDER: "Digitale Videotechnik in der Unterhaltungselektronik-heute und morgen"

## Description

La présente invention concerne un procédé de traitement d'un signal vidéo, plus particulièrement un procédé de traitement permettant d'afficher une image au format 4/3 sur un tube de télévision au format 16/9.

Depuis peu, il existe sur le marché des tubes images au format 16/9. Ces tubes ont été développés pour les applications haute définition. Toutefois, on envisage dès aujourd'hui d'équiper les téléviseurs avec ce type de tube, notamment les téléviseurs dont l'architecture a été réalisée pour être compatible avec les futurs standards. Cependant, l'ensemble des programmes actuellement diffusés le sont au format 4/3. Il est donc nécessaire pour pouvoir afficher une image vidéo au format 4/3 sur un tube 16/9 de traiter cette image afin d'éliminer les problèmes de distorsion ou anamorphose lors de l'affichage.

Différentes techniques ont été développées pour pouvoir afficher une image 4/3 sur un tube de télévision au format 16/9. Ainsi, dans la demande de brevet allemande DE-A-37 22 172, on utilise des techniques basées sur la combinaison de la variation de la taille verticale de l'image en changeant l'amplitude du courant de déflection verticale et en changeant la taille horizontale de l'image avec des moyens électroniques.

Voir aussi EP-A-0 343 539.

La présente invention concerne un nouveau procédé de traitement basé sur l'utilisation de mémoires de trame comme moyen de stockage.

En conséquence, la présente invention a pour objet un procédé de traitement d'un signal vidéo codé sous forme de blocs de k mots, ce signal étant écrit dans ou lu à partir de deux mémoires de trame comportant chacune un port d'entrée, un port de sortie à vitesse rapide et un port de sortie à vitesse lente, caractérisé en ce que le signal vidéo numérique en entrée est formé par des ensembles de M′ blocs avec N′ blocs contenant des données de luminance et M′-N′ blocs contenant des données de chrominance, en ce que les blocs contenant les données de chrominance sont inscrits dans la première mémoire et les blocs contenant les données de luminance sont inscrits dans la deuxième mémoire, les mémoires étant inversées à chaque trame et en ce que les blocs contenant les données de luminance et les blocs contenant les données de chrominance sont lus simultanément sur le port de sortie à vitesse rapide de chaque mémoire, les mémoires étant inversées à chaque trame, et les données étant éventuellement traitées le manière à obtenir en sortie des données vidéo présentant un rapport de compression de M/N avec M > N.

Selon un mode de réalisation particulier, M = 4 et N = 3. D'autre quart le port d'entrée de la mémoire de trame fonctionne à une fréquence d'horloge de 13,5 MHz tandis que le port de sortie à vitesse rapide fonctionne à une fréquence d'horloge de 27 MHz. De ce fait, on obtient en sortie des données de luminance qui sont directement exploitables pour un affichage sur un tube de télévision au format 16/9, tandis que les données de chrominance sont exploitables après stockage dans une mémoire tampon permettant d'obtenir la fréquence d'échantillonnage voulue.

Selon une autre caractéristique de la présente invention, les blocs contenant les données de luminance et les blocs contenant les données de chrominance sont lus simultanément sur le port de sortie à vitesse lente de chaque mémoire, les mémoires étant inversées à chaque trame, de manière à obtenir en sortie des données vidéo retardées d'une image. De ce fait, les données issues des ports de sortie à vitesse lente peuvent être réinjectées en entrée dans le circuit de pré-traitement des signaux vidéo de manière à obtenir une réduction de bruit par exemple.

D'autres caractéristiques et avantages de la présente invention apparaîtront à la lecture de la description faite ci-après d'un mode de réalisation préférentiel du procédé de traitement de signal vidéo conforme à la présente invention ainsi que d'un dispositif pour la mise en oeuvre dudit procédé, la description étant faite avec référence aux dessins ci-annexés dans lesquels :
- la figure 1 est un schéma synoptique d'une mémoire de trame utilisée dans la présente invention ;
- la figure 2 est un diagramme des temps représentant le contenu des différentes mémoires de trame en fonction du temps ;
- les figures 3, 4 et 5 sont des diagrammes des temps représentant les différents signaux de commande des mémoires de trame respectivement au niveau du port d'entrée et des deux ports de sortie, et
- la figure 6 est un schéma synoptique d'un dispositif pour la mise en oeuvre du procédé de traitement conforme à la présente invention.

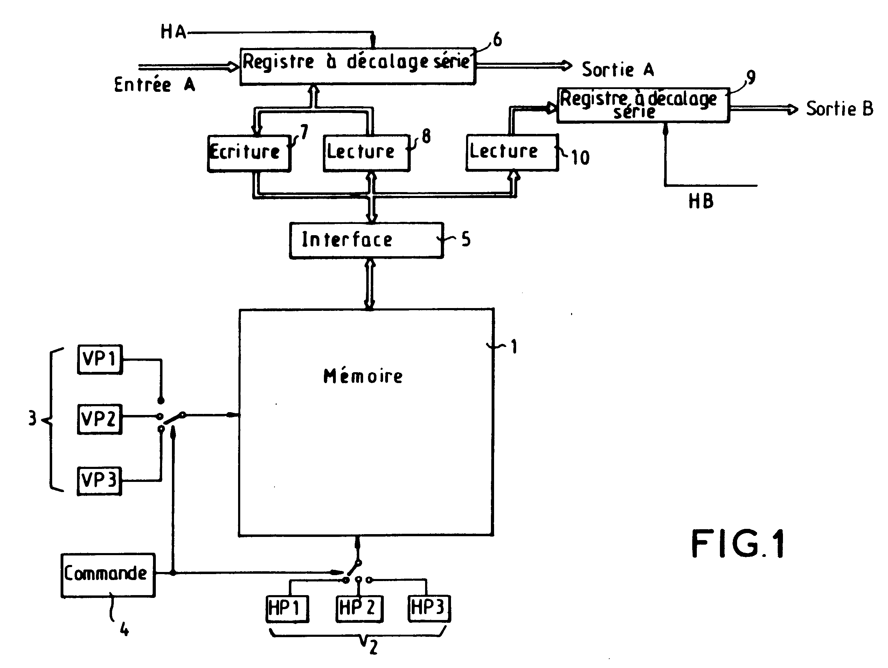

Sur la figure 1, on a représenté schématiquement un type de mémoire de trame pouvant être utilisé dans le cadre de la présente invention. Cette représentation n'est pas limitative. Ladite mémoire est une mémoire vidéo. Comme représenté sur la figure 1, la mémoire vidéo comporte essentiellement une partie mémoire 1 qui est commandée par des compteurs horizontaux 2 et des compteurs verticaux 3 pilotés par un circuit de commande 4. De manière plus spécifique, les compteurs horizontaux 2 sont constitués par trois pointeurs internes HP1, HP2, HP3 tandis que les compteurs verticaux sont constitués par trois pointeurs internes VP1, VP2, VP3. Les pointeurs VP1 et HP1 pointent le bloc où doivent être écrites les données en entrée, les pointeurs VP2 et HP2 pointent le bloc qui doit être lu au niveau de la sortie série A tandis que les pointeurs VP3 et HP3 pointent le bloc qui doit être lu sur la sortie série B. La mémoire comporte d'autre part un interface 5 entre les registres d'entrée et sortie et la partie mémoire proprement dite. Elle comporte aussi un registre à décalage série 6 piloté par une horloge HA et qui constitue un registre tampon pour le port d'entrée A et le port de sortie A. Ce registre à décalage série 6 est relié à l'interface 5 par l'intermédiaire de circuits de maintien d'écriture 7 et de lecture 8. Elle comporte de plus un registre à décalage série 9 piloté par une horloge HB qui constitue un registre tampon pour le port de sortie B et qui est connecté aux circuit d'interface 5 par l'intermédiaire d'un circuit de maintien de lecture 10. Dans ce cas, la fréquence d'horloge des deux ports d'entrée et de sortie A est identique tandis que la fréquence d'horloge du second port de sortie, à savoir le port B, est un multiple entier de la fréquence d'horloge au port d'entrée A. Chaque port peut être adressé par un ensemble de deux compteurs, à savoir un compteur pour les colonnes et un compteur pour les lignes. Les trois ensembles de compteurs disponibles sont complètement indépendants, comme représenté sur la figure 1. En général, on ne peut pas accèder à la mémoire proprement dite mot par mot parce que le temps d'accès serait beaucoup trop long. De ce fait, on accède à la mémoire par blocs de k mots, k étant choisi égal à 12 dans le mode de réalisation représenté. Ainsi, lorsque le compteur horizontal est incrémenté de un, on accède à un nouveau bloc de 12 mots. L'incrémentation de chaque compteur est commandée d'une manière externe par le circuit 4. Cette mémoire vidéo est utilisée pour stocker un signal vidéo numérisé. En conséquence, les données contenues dans la mémoire de trame sont constituées par des échantillons de signaux luminance et des échantillons de signaux chrominance. Habituellement, la chrominance a une fréquence d'échantillonnage inférieure à celle de la luminance. Dans le cadre de la présente invention, les blocs de données comportent soit des données luminance, soit des données chrominance et trois blocs de données luminance sont entrelacés avec un bloc de données chrominance, comme cela est expliqué ci-après avec référence aux différents diagrammes de temps.

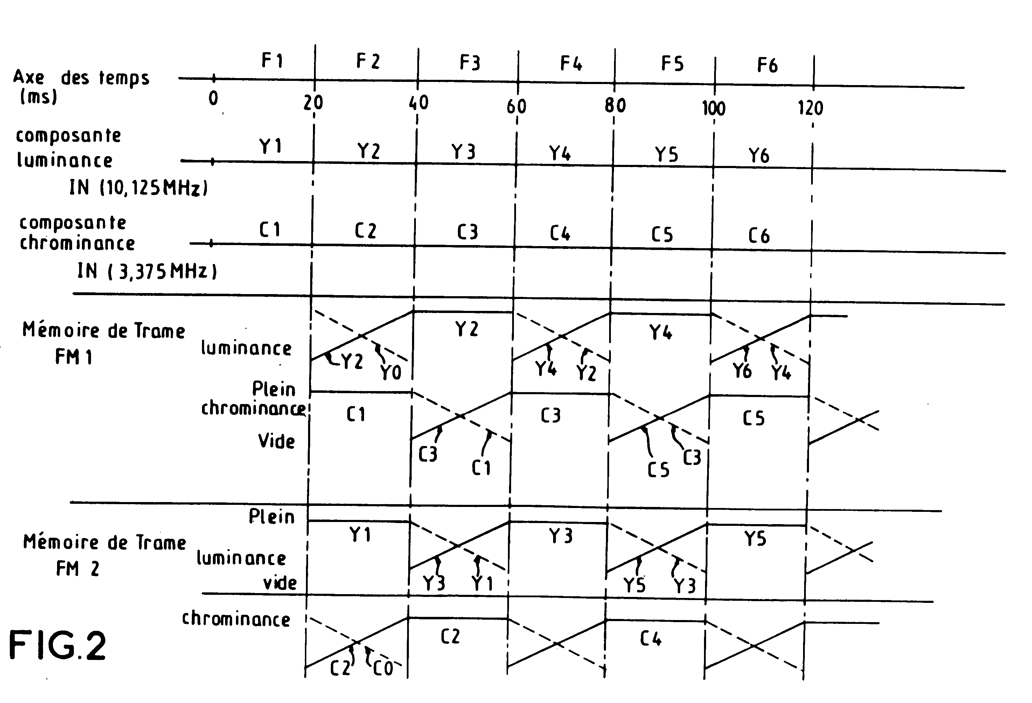

On décrira maintenant en se référant aux figures 2 à 6, un mode de réalisation du procédé de traitement d'un signal vidéo permettant un affichage d'un signal au format 4/3 sur un tube de télévision au format 16/9 conformément à la présente invention. Ce procédé de traitement s'applique au cas où le système utilise deux mémoires de trame. Comme représenté sur la figure 2, chaque trame F1, F2, F3, F4, F5, F6 a une durée de 20 ms. Dans le cas d'une image couleur, la fréquence d'échantillonnage est partagée entre les composantes luminance Y1, Y2, Y3, Y4, Y5, Y6 et les composantes chrominance C1, C2, C3, C4, C5, C6. La fréquence d'échantillonnage de la luminance est de 10, 125 MHz et celle d'une composante chrominance de 3,375 MHz, ce qui permet d'obtenir une fréquence d'échantillonnage de 13,5MHz, à savoir la fréquence horloge duport d'entrée A d'une mémoire de trame dans le mode de réalisation représenté. L'organisation des données dans chaque mémoire de trame FM1 et FM2 est représentée sur cette figure 2. On peut voir que les composantes vidéo YI et CI sont écrites séparément dans les deux mémoires de trame.

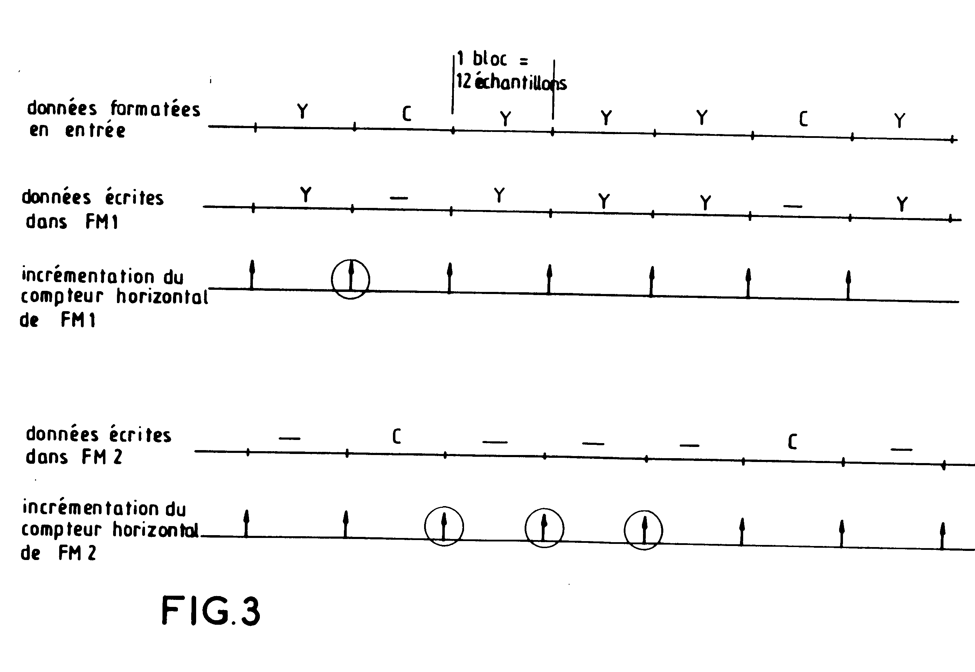

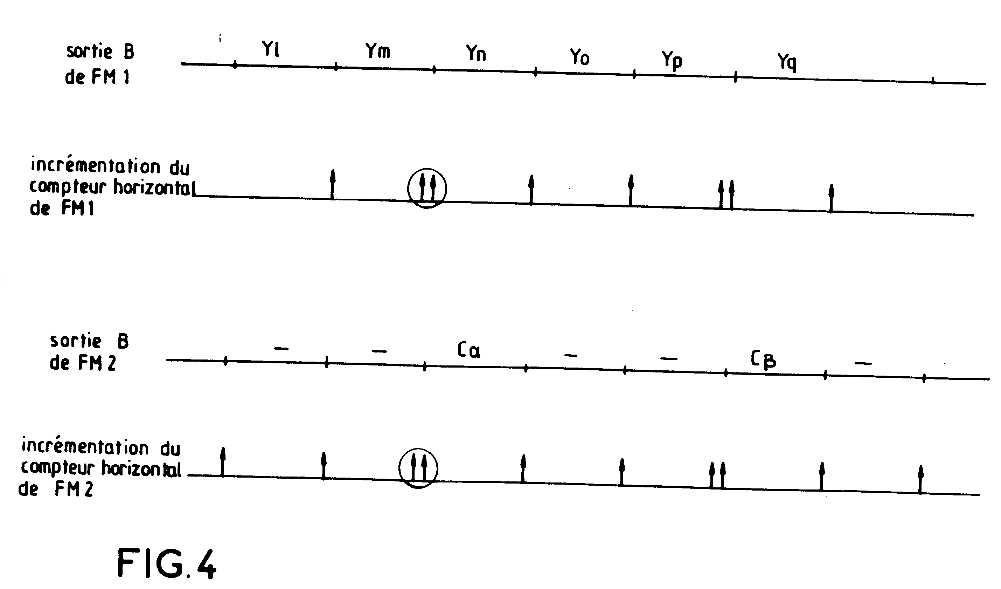

Comme représenté sur la figure 3, le signal vidéo a été numérisé et mis sous forme de blocs de 12 échantillons. Les données formatées en entrée comportent successivement trois échantillons de données luminance Y suivi d'un échantillon de données chrominance C, cette suite se répètant. Conformément au procédé de la présente invention, dans la première mémoire de trame FM1, on écrit tout d'abord les données de luminance. L'incrémentation du compteur horizontal de FM1 est réalisée comme représenté sur la figure 1. A la première incrémentation du compteur, on écrit le bloc de données de luminance Y. Le compteur de FM1 est incrémenté mais l'écriture n'est pas autorisée. La donnée en entrée étant une donnée de chrominance, celle-ci n'est pas inscrite dans la mémoire de trame FM1 mais est inscrite dans la mémoire de trame FM2, comme représenté sur la figure 3. Il en est ainsi pour tous les blocs constituant une trame, par exemple la trame F2 sur la figure 2. Lors de la trame suivante, on inverse les deux mémoires et ainsi on écrit les données de chrominance dans la mémoire de trame FM1, ces données étant représentées par C3 sur la figure 2, et les données de luminance dans la mémoire de trame FM2, ces données étant représentées par Y3 sur la figure 2. Ainsi, conformément à la présente invention, une des mémoires de trame stocke tout d'abord les composantes luminance échantillonnées à 10,125 MHz tandis que l'autre mémoire de trame stocke les composantes de chrominance U et V échantillonnées à 3,375 MHz. Lorsque l'on lit les données sur le port de sortie B de chaque mémoire de trame, on obtient donc pour les données écrites conformément au diagramme représenté sur la figure 3 les données représentées sur la figure 4. De ce fait, sur le port de sortie B de la mémoire de trame FM1, on obtient en continu les composantes de luminance Yl, Ym, Yn, Yo, Yp, Ya qui sont sorties à la fréquence instantanée de 27 MHz, ce qui correspond bien à un rapport de compression de 4/3. En effet, 27 = (10,125 x 2) x (4/3). Dans ce ras, l'incrémentation du compteur horizontal de la mémoire de trame FM1 est réalisée comme représenté sur la figure 4. On envoie toutes les trois impulsions deux impulsions de commande simultanées puisqu'une composante de chrominance est entrelacée avec trois composantes de luminance. Simultanément, on sort sur le port de sortie B de la mémoire de trame FM2, les composantes de chrominances C α/C β. Dans ce cas, un bloc de données valide est sorti tous les trois blocs au moment où l'incrémentation du compteur horizontal est constituée par deux impulsions. Un registre tampon est bien sûr nécessaire pour obtenir un flot de données continu à la fréquence d'échantillonnage des données de chrominance, à savoir 9 MHz à partir de ce flot à 27 MHz.

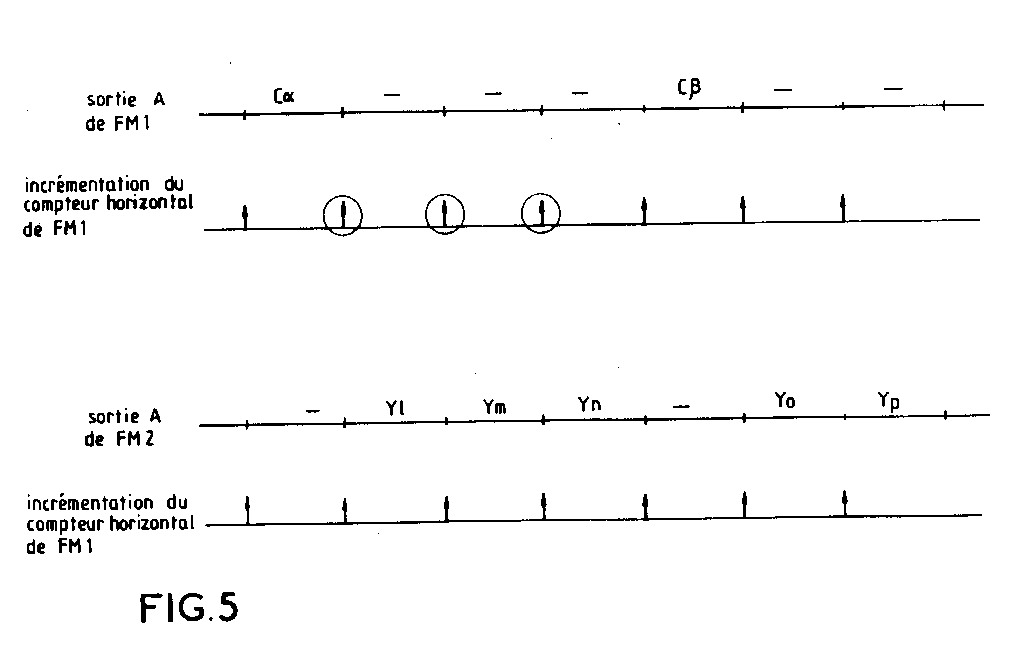

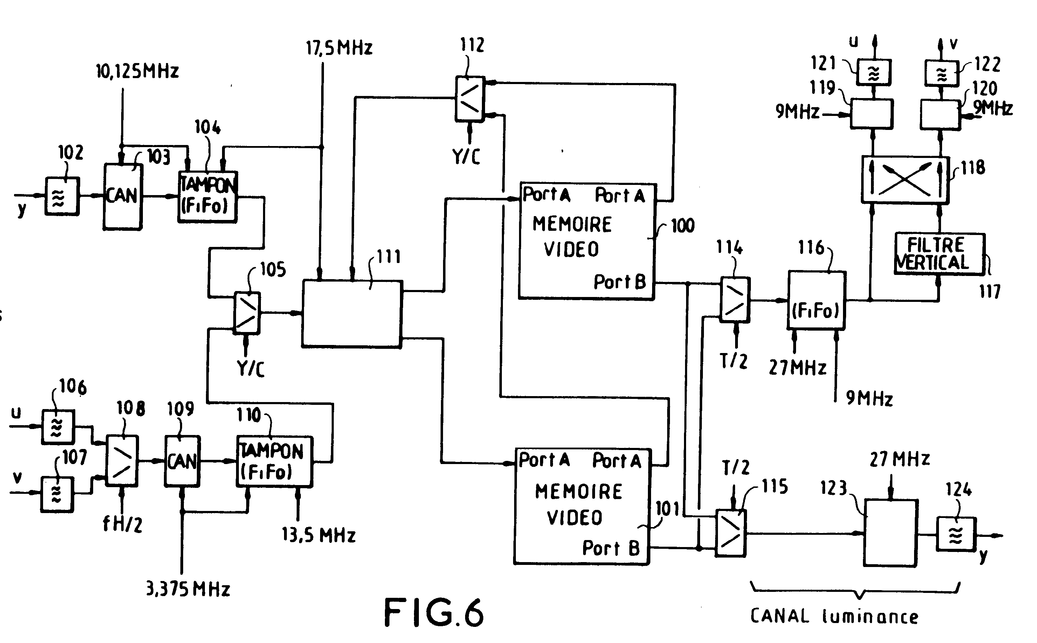

Selon une autre caractéristique de la présente invention, le port de sortie A des deux mémoires de trame est utilisé pour obtenir des données permettant de réaliser un traitement de réduction de bruit. Etant donné le mode d'écriture utilisé pour écrire dans les mémoires de trame FM1 et FM2, la composante luminance est obtenue à partir d'une mémoire de trame, tandis que la composante chrominance est obtenue à partir de l'autre mémoire de trame, les fonctions de chaque mémoire étant inversées à chaque trame. Les signaux de commande montrant le fonctionnement de l'incrémentation des compteurs sont représentés sur la figure 5. Le port de sortie A fonctionnant à la même fréquence que le port d'entrée A, on obtient sur le port de sortie A de chaque mémoire de trame FM1 et FM2 respectivement une composante chrominance C α ou C β suivie de trois blocs sans signification et trois composantes luminance Yl, Ym, Yn, Yon Yp, ... suivies d'un bloc sans signification. Dans ce cas, le compteur est incrémenté de manière à pointer les blocs suivants, mais les données sont sans signification. En sortie des ports A des mémoires de trame FM1 et FM2, on obtient donc des données retardées d'une image qui peuvent être utilisées pour la réduction de bruit ou pour tout autre traitement en étant renvoyées sur un circuit de prétraitement, comme représenté ci-après sur la figure 6.

On décrira maintenant avec référence à la figure 6 un dispositif permettant la mise en oeuvre du procédé de traitement conforme à la présente invention. Dans les circuits représentés sur la figure 6, les composantes luminance et chrominance d'un signal vidéo ont tout d'abord été séparées avant d'être traitées et stockées dans les mémoires vidéo FM1 et FM2. Comme représenté sur la figure 6, le circuit conforme à la présente invention comporte deux mémoires vidéo 100, 101 à trois ports, à savoir un port d'entrée A fonctionnant à une fréquence de 13,5 MHz, un port de sortie à vitesse lente A fonctionnant à une fréquence de 13,5 MHz et un port de sortie à vitesse rapide B fonctionnant à une fréquence de 27 MHz. Les ports d'entrée A des mémoires vidéo 100 et 101 reçoivent des signaux numérisés issus d'un circuit de traitement de signal 111. Ce circuit de traitement 111 reçoit en entrée les signaux de luminance Y et de chrominance C multiplexés dans le circuit 105 pour former un signal à 13,5 méga-échantillons par seconde. Avant d'entrer dans le circuit 105, le signal luminance Y est envoyé sur un filtre passe-bas 102 puis un convertisseur analogique numérique 103 transformant ledit signal de luminance en des données numériques échantillonnées à la fréquence de 10,125 MHz et un circuit tampon 104 de type FIFO ( pour premier entré, premier sorti) entrant les données à une fréquence de 10,125 MHz et les sortant à la fréquence de traitement de 13,5 MHz ; de même avant d'entrer dans le circuit 105 les signaux de luminance sont envoyés sur un filtre passe-bas 106 recevant le signal de chrominance U et sur un filtre passe-bas 107 recevant le signal de chrominance V, puis sur un multiplexeur 108 multiplexant les signaux U et V issus des filtres passe-bas 106 et 107, le multiplexeur fonctionnant à une fréquence FH/2, un convertisseur analogique-numérique 109 transformant les signaux analogiques de chrominance en des données numériques de chrominance échantillonnées à la fréquence de 3,375 MHz, et sur un circuit tampon 110 de type FIFO dont l'entrée fonctionne à la fréquence de 3,375 MHz et la sortie à la fréquence de 13,5 MHz.Comme représenté sur la figure 6, les ports de sortie A des mémoires 100 et 101 sont connectés chacun en entrée de deux multiplexeurs 112, 113 fonctionnant à la fréquence trame. Les sorties des multiplexeurs 112, 113 sont envoyées respectivement sur le circuit de traitement de signal 105 et le circuit de traitement de signal 113, de manière à réaliser une réduction de bruit en ajoutant, au signal luminance ou au signal chrominance, le signal pondéré de l'image précédente. D'autre part, les sorties B des mémoires vidéo 100 et 101 sont respectivement connectées sur les entrées de deux multiplexeurs 114, 115 fonctionnant à la fréquence image T/2. En sortie du multiplexeur 114, on obtient les données de chrominance à une fréquence d'échantillonnage instantanée de 27 MHz. Ces données de chrominance sont entrées dans un registre tampon 116 de type FIFO qui les sort à la fréquence d'échantillonnage de 9 MHz. Les données en sortie du registre tampon sont envoyées soit directement, soit après passage dans un filtre vertical 117 vers un circuit de démultiplexage 118 de manière à séparer les données de chrominance en la donnée de chrominance U et la donnée de chrominance V. Elles sont envoyées chacune sur un convertisseur numérique-analogique 119, 120 fonctionnant à la fréquence de 9 MHz et d'une manière connue les signaux issus des convertisseurs numériques-analogiques 119, 120 sont envoyés sur des filtres passe-bas 121, 122 de manière à obtenir en sortie des signaux de chrominance U et V pouvant être affichés sans distorsion sur un écran 16/9. De même, en sortie du multiplexeur 115, on obtient un signal de luminance à la fréquence d'échantillonnage de 27 MHz. Ce signal est envoyé sur un convertisseur numérique-analogique 123 fonctionnant à 27 MHz, puis sur un filtre passe-bas 124 de manière à obtenir un signal luminance directement affichable sur un écran 16/9.

Le circuit décrit ci-dessus permet donc en utilisant deux mémoires de trame de réaliser un traitement du signal vidéo conformément à la présente invention. Ce traitement permet un affichage d'un signal vidéo sur un écran 16/9 sans distorsion.

## Revendications

1. Procédé de traitement d'un signal vidéo codé sous forme de blocs de k mots, ce signal étant écrit dans ou lu à partir de deux mémoires de trame comportant chacune un port d'entrée, un port de sortie à vitesse rapide et un port de sortie à vitesse lente, caractérisé en ce que le signal vidéo numérique en entrée est formé par des ensembles de M′ blocs avec N′ blocs contenant des données de luminance et M′-N′ blocs contenant des données de chrominance, en ce que les blocs contenant les données de chrominance sont inscrits dans la première mémoire et les blocs contenant les données de luminance sont inscrits dans la deuxième mémoire, les mémoires étant inversées à chaque trame et en ce que les blocs contenant les données de luminance et les blocs contenant les données de chrominance sont lus simultanément sur le port de sortie à vitesse rapide de chaque mémoire, les mémoires étant inversées à chaque trame, et les données étant éventuellement traitées de manière à obtenir en sortie des données vidéo présentant un rapport de compression de M/N avec M > N.

2. Procédé de traitement selon la revendication 1, caractérisé en ce que M = 4 et N = 3.

3. Procédé de traitement selon l'une quelconque des revendications 1 et 2, caractérisé en ce que le port d'entrée fonctionne à une fréquence d'horloge de 13,5 MHz et le port de sortie à vitesse rapide à une fréquence d'horloge de 27 MHz.

4. Procédé de traitement selon l'une quelconque des revendications 1 à 3, caractérisé en ce que les blocs contenant les données de luminance et les blocs contenant les données de chrominance sont lus simultanément sur le port de sortie à vitesse lente de chaque mémoire, les mémoires étant inversées à chaque trame, de manière à obtenir en sortie des données vidéo retardées d'une trame.

5. Procédé de traitement selon la revendication 4, caractérisé en ce que le port de sortie à vitesse lente fonctionne à une fréquence d'horloge de 13,5 MHz.

## Patentansprüche

1. Verfahren zur Verarbeitung eines Videosignals, das in Form von Blöcken von k Wörtern codiert ist, wobei dieses Signal in zwei Teilbildspeicher mit jeweils einem Eingangsanschluß, einem Ausgangsanschluß hoher Geschwindigkeit und einem Ausgangsanschluß niedriger Geschwindigkeit eingeschrieben oder von diesen ausgelesen wird, dadurch gekennzeichnet, daß das numerische Videosignal am Eingang durch Sätze von M′ Blöcken gebildet wird, wobei N' Blöcke Luminanzdaten M′-N′ Blöcke Chrominanzdaten enthalten, daß die die Chrominanzdaten enthaltenden Blöcke in den ersten Speicher und die die Luminanzdaten enthaltenden Blöcke in den zweiten Speicher eingeschrieben werden, wobei die Speicher bei jedem Teilbild umgeschaltet werden, und daß die die Luminanzdaten enthaltenden Blöcke und die die Chrominanzdaten enthaltenden Blöcke gleichzeitig an dem Ausgangsanschluß hoher Geschwindigkeit eines jeden Speichers gelesen werden, wobei die Speicher bei jedem Teilbild umgeschaltet werden, und wobei die Daten ggf. so verarbeitet werden, daß am Ausgang Videodaten erhalten werden, die einen Verdichtungsgrad von M/N mit M > N aufweisen.

2. Verarbeitungsverfahren nach Anspruch 1, dadurch gekennzeichnet, daß M = 4 und N = 3 ist.

3. Verarbeitungsverfahren nach einem der Ansprüche 1 und 2, dadurch gekennzeichnet, daß der Eingangsanschluß bei einer Taktfrequenz von 13,5 MHz und der Ausgangsanschluß hoher Geschwindigkeit bei einer Taktfrequenz von 27 MHz arbeitet.

4. Verarbeitungsverfahren nach einem der Ansprüche 1-3, dadurch gekennzeichnet, daß die die Luminanzdaten enthaltenden Blöcke und die die Chrominanzdaten enthaltenden Blöcke gleichzeitig an dem Ausgangsanschluß niedriger Geschwindigkeit eines jeden Speichers gelesen werden, wobei die Speicher bei jedem Teilbild umgeschaltet werden, derart, daß am Ausgang um ein Teilbild verzögerte Videodaten erhalten werden.

5. Verarbeitungsverfahren nach Anspruch 4, dadurch gekennzeichnet, daß der Ausgangsanschluß niedriger Geschwindigkeit bei einer Taktfrequenz von 13,5 MHz arbeitet.

## Claims

1. Method of processing a video signal coded in the form of blocks of k words, this signal being written into or read from two frame memories each including an input port, a high-speed output port and a low-speed output port, characterised in that the input digital video signal is formed of sets of M' blocks with N' blocks containing luminance data and M'-N' blocks containing chrominance data, in that the blocks containing the chrominance data are written into the first memory and the blocks containing the luminance data are written into the second memory, the memories being inverted on each frame and in that the blocks containing the luminance data and the blocks containing the chrominance data are read simultaneously on the high-speed output port of each memory, the memories being inverted on each frame, and the data possibly being processed so as to obtain output video data exhibiting a compression ratio of M/N with M > N.

2. Processing method according to Claim 1, characterized in that M = 4 and N = 3.

3. Processing method according to either of Claims 1 or 2, characterized in that the input port operates at a clock frequency of 13.5 MHz and the high-speed output port at a clock frequency of 27 MHz.

4. Processing method according to any one of Claims 1 to 3, characterized in that the blocks containing the luminance data and the blocks containing the chrominance data are read simultaneously on the low-speed output port of each memory, the memories being reversed on each frame, in such a way as to obtain output video data delayed by one frame.

5. Processing method according to Claim 4, characterized in that the low-speed output port operates at a clock frequency of 13.5 MHz.
